# EUROPEAN PATENT SPECIFICATION

(11) **EP 3 905 623 B1**
(45) Date of publication and mention of the grant of the patent: **10.12.2025**
(21) Application number: 19902692.3
(22) Date of filing: 22.10.2019
(51) Int. Cl.: H04L 9/40, H04L 67/141, H04L 69/24, H04L 69/22, H04L 12/46

(54) **DATA TRANSMISSION METHOD AND APPARATUS, RELATED DEVICE, AND STORAGE MEDIUM**
DATENÜBERTRAGUNGSVERFAHREN UND -EINRICHTUNG, ZUGEHÖRIGE VORRICHTUNG UND SPEICHERMEDIUM
PROCÉDÉ ET APPAREIL DE TRANSMISSION DE DONNÉES, DISPOSITIF ASSOCIÉ ET SUPPORT D'ENREGISTREMENT

(30) Priority: 28.12.2018 CN 201811628535
(43) Date of publication of application: 03.11.2021
(73) Proprietor: ZTE Corporation, Shenzhen, Guangdong 518057 (CN)
(72) Inventor: MAO, Yuxin, Shenzhen, Guangdong 518057 (CN); YAN, Xincheng, Shenzhen, Guangdong 518057 (CN); WU, Huaqiang, Shenzhen, Guangdong 518057 (CN); LIU, Yanchang, Shenzhen, Guangdong 518057 (CN)
(74) Representative: Cristinelli, Luca
(86) International application number: PCT/CN2019/112548
(87) International publication number: WO 2020/134413

(56) References cited:
- CN-A- 102 907 056
- CN-A- 104 247 367
- CN-A- 106 998 549
- CN-A- 108 989 194
- CN-A- 108 989 194
- CN-A- 108 989 194
- JP-A- 2000 315 997
- US-A1- 2010 217 971
- US-A1- 2010 217 971
- US-A1- 2010 268 935
- MOTOROLA MOBILITY-LENOVO; NOKIA; NOKIA SHANGHAI BELL: "Changing Transport Mode to Tunnel Mode for IPsec Tunnel", 3GPP TSG-CT WG1 MEETING #111BIS C1-184265, 13 July 2018 (2018-07-13), XP051465766, DOI: 20200110184653A

## Description

### Technical Field

The present application relates to the technical field of network communication security, and particularly to a data transmission method and apparatus, a related device, and a storage medium.

### Background

At present, in a 5th Generation mobile communication technology (5G) network, in order to ensure the security of data transmission, an Internet Protocol Security (IPSec) tunnel may usually be used to protect the integrity of data. At present, for improving the processing performance of an IPSec tunnel, after an encryption end transmits a data stream to a decryption end through the IPSec tunnel, the decryption end may transmit each encrypted message in the data stream to multiple encryption units for decryption processing according to a preset algorithm.

In the abovementioned manner, the decryption end processes multiple messages of the data stream by means of multiple decryption units respectively, which may aggravate a message disorder.

The related document US 2010/217971 A1 discloses an aggregation of cryptography engines, the related document US 2010/268935 A1 discloses a method, system, and computer readable media for maintaining flow affinity to internet protocol security (IPSec) sessions in a load-sharing security gateway, the related document CN 108989194 A discloses a distributed IPSec gateway, and the related document JP 2000 315997 A discloses a encryption communication method and node unit.

### Summary

Embodiments of the present application provide a data transmission method and apparatus, a related device, and a storage medium, which are set out in the appended set of claims.

According to the data transmission method and apparatus, related device, and storage medium provided in the embodiments of the present application, the virtual SPI identifier is determined according to the stream identifier of the data stream and the SPI identifier of the IPSec tunnel through which the data stream is transmitted; the virtual SPI identifier is added in each encrypted message in the data stream; and the data stream is transmitted to the receiver through the IPSec tunnel, wherein the virtual SPI identifier is used for the receiver to transmit each encrypted message in the data stream to a same encryption unit for decryption processing. With adoption of the solutions of the embodiments of the present application, the sender sends each message containing the virtual SPI identifier to the receiver, and then the receiver may input the messages with the same virtual SPI identifier into the same decryption unit for decryption processing. As such, the problem of message disorder can be solved, and meanwhile, the processing performance of the IPSec tunnel can be improved.

### Brief Description of the Drawings

Fig. 1 is a schematic diagram of an IPSec tunnel according to a related art;
Fig. 2 is a schematic diagram of data transmission through an IPSec tunnel according to the related art;
Fig. 3 is a schematic diagram of a message disorder according to the related art;
Fig. 4 is a first implementation flowchart of a data transmission method according to an embodiment of the present application;
Fig. 5 is a second implementation flowchart of a data transmission method according to an embodiment of the present application;
Fig. 6 is a third implementation flowchart of a data transmission method according to an embodiment of the present application;
Fig. 7 is a fourth implementation flowchart of a data transmission method according to an embodiment of the present application;
Fig. 8 is a schematic diagram of determining a virtual SPI identifier according to an embodiment of the present application;
Fig. 9 is a schematic diagram of decrypting a message according to an embodiment of the present application;
Fig. 10 is a schematic diagram of transmitting a data stream through a child IPSec tunnel according to an embodiment of the present application;
Fig. 11 is a first composition structure diagram of a data transmission apparatus according to an embodiment of the present application;
Fig. 12 is a second composition structure diagram of a data transmission apparatus according to an embodiment of the present application;
Fig. 13 is a third composition structure diagram of a data transmission apparatus according to an embodiment of the present application;
Fig. 14 is a fourth composition structure diagram of a data transmission apparatus according to an embodiment of the present application;
Fig. 15 is a fifth composition structure diagram of a data transmission apparatus according to an embodiment of the present application; and
Fig. 16 is a sixth composition structure diagram of a data transmission apparatus according to an embodiment of the present application.

### Detailed Description

The present application will further be described below in combination with the drawings and the embodiments in detail.

At present, an IPSec tunnel is required to be established between a sender and a receiver, so as to ensure the security of data transmission and protect the integrity of data. The IPSec tunnel may be represented by Security Association (SA). Before the IPSec tunnel is formally established, the sender and the receiver need to negotiate to establish the SA. Since the IPSec tunnel is unidirectional, one IPSec tunnel includes two SAs, and each SA may be uniquely identified with an SPI. The SA predetermines use of the same encapsulation mode, encryption algorithm, encryption key, authentication algorithm, and authentication key at two ends of the tunnel. The encapsulation mode may include an Encapsulating Security Payload (ESP) and an Authentication Header (AH). The encryption algorithm may include a Data Encryption Standard (DES), Triple DES (3DES), and an Advanced Encryption Standard (AES). The authentication algorithm may include Message Digest 5 (MD5), Secure Hash Algorithm 1 (SHA1), and Secure Hash Algorithm 2 (SHA2).

Here, a manner for establishing the IPSec tunnel may include a manual establishment manner and an Internet Key Exchange (IKE)-based dynamic negotiation establishment manner.

The manual establishment manner may include the following operations.

In operation 1, an Access Control List (ACL) is configured, and a data stream required to be protected is defined through the ACL, namely the ACL includes an identifier of the data stream required to be protected, which is usually a quintuple.

Here, only the data stream defined through the ACL is protected by the IPSec tunnel, and other data streams are not protected.

In operation 2, an IPSec SA is established.

In some exemplary implementations, IPSec security proposals are configured, for example, the same encapsulation mode, encryption algorithm, and authentication algorithm are configured in respective security proposals at two ends of the tunnel. An IPSec security policy is configured, for example, addresses, SA identifier SPI, encryption key, authentication key, etc., used at the two ends of the tunnel are defined. The IPSec tunnel is established after the configuration and application of the IPSec security policy, and a message is transmitted through the established IPSec tunnel according to an ACL policy.

The IKE-based dynamic negotiation establishment manner may include the following operations.

In operation 1, an ACL is configured, and a data stream to be protected is defined through the ACL, namely the ACL includes an identifier of the data stream required to be protected.

Here, if IKE version 1 (IKEv1) is used, ACL rules are not negotiated, and the ACL rules configured in devices at two ends of the tunnel are mutually mirrored, so that an IPSec SA negotiation failure is avoided. If IKE version 2 (IKEv2) is used, negotiation about the ACL rules in the devices at the two ends is implemented through a Traffic Selector (TS) payload, and a final result is an intersection of the ACL rules of the devices at the two ends.

In operation 2, an IKE SA is established.

In some exemplary implementations, IKE security proposals are negotiated, for example, encryption and authentication algorithms for establishment of the IKE SA are configured, a negotiation message receiver searches in its own configured IKE security proposals for an IKE security proposal matched with a sender, and if no security proposal is matched, negotiation fails. IKE peers are configured, for example, IKE versions and identity authentication and exchange modes are configured. An IPSec SA is established in the following manner: IPSec security proposals are configured, for example, the same encapsulation mode, encryption algorithm, and authentication algorithm are configured in respective security proposals at two ends of the tunnel. An IPSec security policy is configured, for example, addresses, SA identifier SPI, encryption key, authentication key, etc., used at the two ends of the tunnel are defined. The IPSec tunnel is established after the configuration and application of the IPSec security policy, and a message is transmitted through the established IPSec tunnel according to an ACL policy.

Here, a process of establishing the IKE SA is added to the IKE-based dynamic negotiation establishment.

It is to be noted that both the manual establishment manner and the IKE-based negotiation manner require IP addresses used for the two ends of the tunnel to be fixed. After the IPSec tunnel is established, the sender, after receiving a data stream, judges whether to encrypt each message in the data stream using IPSec according to the ACL, and if YES, searches for a corresponding SA and sends each encrypted message to the receiver using the SA. The receiver decrypts each encrypted message in the data stream and forwards each decrypted message to a message destination.

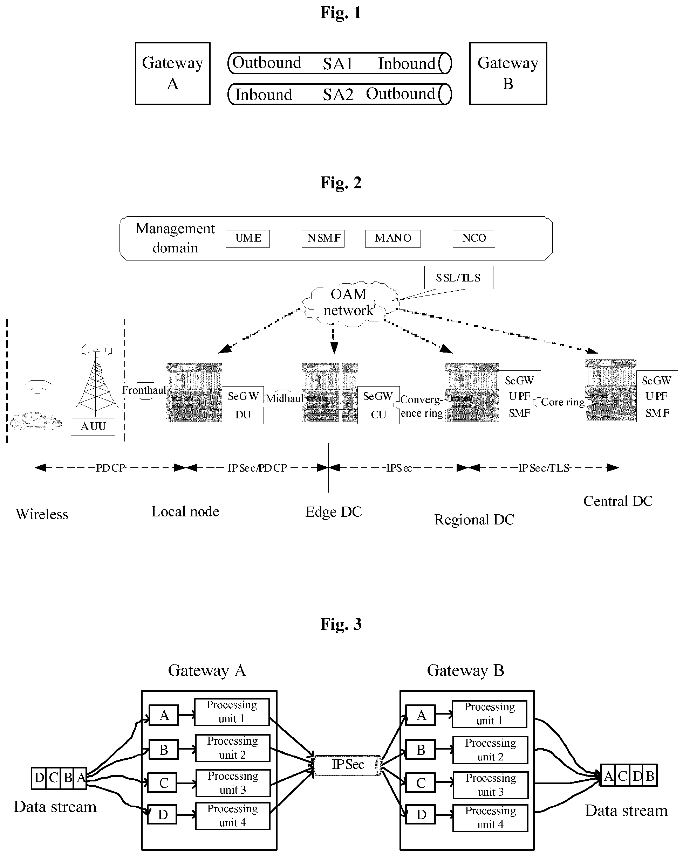

Fig. 1 is a schematic diagram of an IPSec tunnel. As shown in Fig. 1, IPSec tunnel 1 (represented by SA1) is established between gateway A and gateway B for gateway A to send data and for gateway B to receive the data. IPSec tunnel 2 (represented by SA2) is established for gateway B to send data and for gateway A to receive the data.

Fig. 2 is a schematic diagram of data transmission through an IPSec tunnel. As shown in Fig. 2, when a data center where a Central Unit (CU) is located and a data center where a Distributed Unit (DU) is located in a 5G network perform data transmission in an untrusted network, an IPSec tunnel is required to be established between the two data centers to protect the integrity of data and prevent the data from being stolen or tampered. In addition, a backhaul network between a radio access network and a core network and a management and orchestration network between a network element of a service network and a management-domain network element also have a requirement on secure data transmission. In the 5G network, there is made an extremely high requirement on data transmission rate. For example, the International Telecommunication Union (ITU) defines that a single-user peak rate is required to reach 10 Gbps to 20Gbps, and raises a higher requirement on the data rate of the backhaul network. If an IPSec tunnel is required to be used on a data transmission path, the processing performance of the IPSec tunnel is also required to meet a corresponding requirement.

At present, the processing performance of an IPSec tunnel is limited to the processing performance of hardware. If an encryption end or a decryption end encrypts or decrypts a message using a single processing unit, the IPSec tunnel may achieve the processing performance of only hundreds of Mbps only. If the encryption end or the decryption end uses multiple processing units or distributed processing units respectively, after the encryption end transmits a data stream to the decryption end through the IPSec tunnel, the decryption end may transmit each message in the data stream to multiple encryption units for decryption processing according to a preset algorithm. In such case, although the processing performance of the IPSec tunnel can be improved, offloading processing may aggregate a message disorder and affect service experiences.

Fig. 3 is a schematic diagram of a message disorder according to the related art. As shown in Fig. 3, a data stream consists of message A, message B, message C, and message D. After gateway A receives the data stream, according to a preset algorithm, gateway A distributes message A to processing unit 1 for encryption processing, distributes message B to processing unit 2 for encryption processing, distributes message C to processing unit 3 for encryption processing, distributes message D to processing unit 4 for encryption processing, and sends each encrypted message to gateway B through an IPSec tunnel. After receiving each encrypted message in the data stream, according to the preset algorithm, gateway B distributes encrypted message A to processing unit 1 for decryption processing, distributes encrypted message B to processing unit 2 for decryption processing, distributes encrypted message C to processing unit 3 for decryption processing, and distributes encrypted message D to processing unit 4 for decryption processing. Since time sequences that each processing unit receives the messages may be different, and each processing unit may use different message processing manners, there may be brought the problem of message disorder.

Based on this, in each embodiment of the present application, a virtual SPI identifier is determined according to a stream identifier of a data stream and an SPI identifier of an IPSec tunnel through which the data stream is transmitted; the virtual SPI identifier is added in each encrypted message in the data stream; and the data stream is transmitted to a receiver through the IPSec tunnel, wherein the virtual SPI identifier is used for the receiver to transmit each encrypted message in the data stream to a same encryption unit for decryption processing.

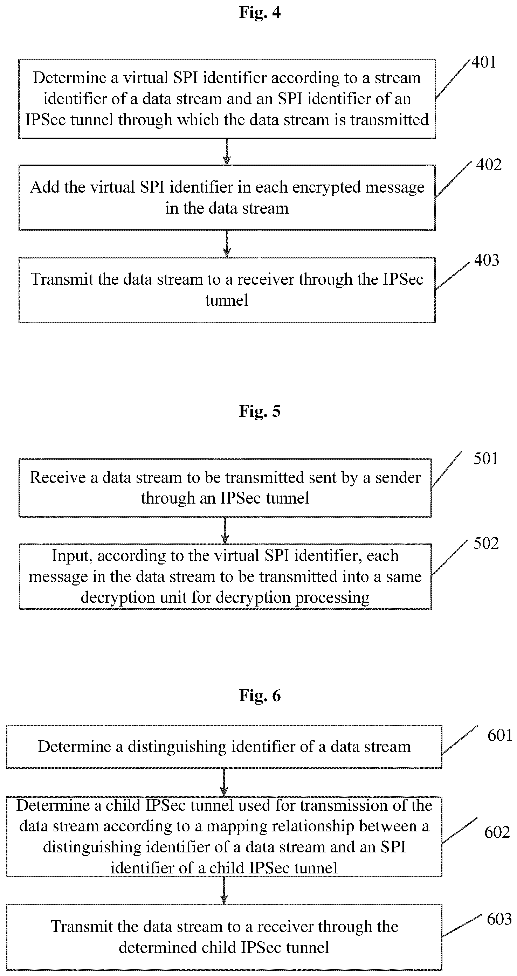

An embodiment of the present application provides a data transmission method, which is applied to a sender. As shown in Fig. 4, the method includes the following operations.

In operation 401, a virtual SPI identifier is determined according to a stream identifier of a data stream and an SPI identifier of an IPSec tunnel through which the data stream is transmitted.

IPSec, i.e., IP Security, is a Layer 3 (L3) tunnel encryption protocol set forth by the Internet Engineering Task Force (IETF), and may build confidence and security between a source IP address and a destination IP address based on an end-to-end security mode.

Here, for ensuring the security of data transmission, multiple IPSec tunnels may be established between the sender and the receiver, and are uniquely identified with SPI identifiers. The receiver allocates multiple decryption units to each IPSec tunnel.

In practical applications, for ensuring that the receiver transmits each message in the same data stream to the same decryption unit in multiple decryption units for decryption processing before decrypting each message in the data stream, a virtual SPI identifier may be determined according to the stream identifier of the data stream and the SPI identifier of the IPSec tunnel through which the data stream is transmitted, wherein the virtual SPI identifier is used for the receiver to transmit messages with the same virtual SPI identifier to the same decryption unit for processing.

Here, before the virtual SPI identifier is determined, the sender also needs to negotiate with the receiver about a virtual SPI supporting capability to determine whether the receiver has the virtual SPI supporting capability.

Based on this, in an exemplary embodiment, before the operation that the virtual SPI identifier is determined according to the stream identifier of the data stream and the SPI identifier of the IPSec tunnel through which the data stream is transmitted, the method may further include that: whether the receiver has a virtual SPI supporting capability is judged; and in a case where the receiver has the virtual SPI supporting capability, the virtual SPI identifier is determined according to the stream identifier of the data stream and the SPI identifier of the IPSec tunnel through which the data stream is transmitted.

Here, the sender negotiates with the receiver about the virtual SPI supporting capability. A negotiation process may be as follows: the sender sets the SPI identifier of the IPSec tunnel through which the data stream is transmitted, for example, a highest bit of the SPI identifier is set to 1 to represent that the sender has a virtual SPI supporting capability; the sender sends the set SPI identifier to the receiver; the receiver reads the set SPI identifier to learn that the sender has the virtual SPI supporting capability; the receiver also sets a highest bit of the SPI identifier, and sends the set SPI identifier to the sender; and the sender determines whether the receiver has the virtual SPI supporting capability according to the SPI identifier sent by the receiver. In some exemplary implementations, if the receiver sets a value of the highest bit to 1, it indicates that the receiver has the virtual SPI supporting capability, as shown in Table 1. If the receiver sets the value of the highest bit to 0, it indicates that the receiver does not have the virtual SPI supporting capability, as shown in Table 2.

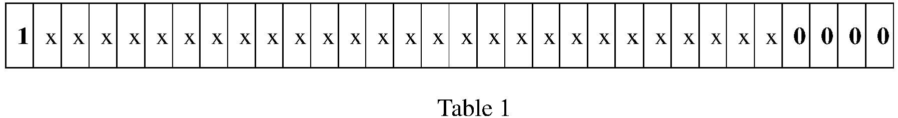

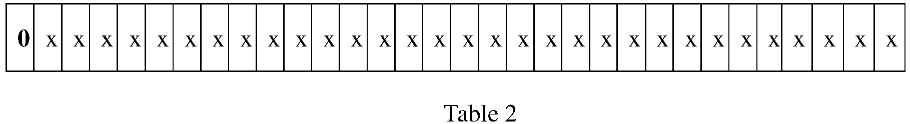

Here, before whether the receiver has the virtual SPI supporting capability is judged, the sender also needs to negotiate with the receiver about an IKE SA and an IPSec SA to determine the IPSec tunnel to be used for transmission of the data stream, namely an IPSec security policy is established, and the IPSec security policy includes a mapping relationship between the stream identifier of the data stream and the SPI identifier of the IPSec tunnel.

Based on this, in an embodiment, before the operation that the virtual SPI identifier is determined according to the stream identifier of the data stream and the SPI identifier of the IPSec tunnel through which the data stream is transmitted, the method may further include that: IPSec SA negotiation is performed with the receiver; and the IPSec tunnel is established. An IPSec security policy is established in a process of establishing the IPSec tunnel, and the IPSec security policy includes a mapping relationship between the stream identifier of the data stream and the SPI identifier of the IPSec tunnel.

In some exemplary implementations, an ACL is created for the data stream, the ACL including the stream identifier of the data stream, and the mapping relationship between the stream identifier of the data stream and the SPI identifier of the IPSec tunnel is established.

Here, a negotiation content of IPSec SA negotiation between the sender and the receiver may include an encapsulation mode, an encryption algorithm, an encryption key, an authentication algorithm, an authentication key, etc., used at two ends of the tunnel.

In practical applications, if the sender determines that the receiver has the virtual SPI supporting capability, the sender, before transmitting the data stream to the receiver, may fill a field of the SPI identifier with a hash value obtained by hashing the stream identifier of the data stream to obtain the virtual SPI identifier.

Based on this, in an exemplary embodiment, the operation that the virtual SPI identifier is determined according to the stream identifier of the data stream and the SPI identifier of the IPSec tunnel through which the data stream is transmitted includes that: a hash operation is performed on the stream identifier of the data stream to obtain a hash value; and a field of the SPI identifier is set according to the obtained hash value to obtain the virtual SPI identifier.

Here, a field at a specific position in the SPI identifier may be set according to the obtained hash value. For example, if the SPI identifier may be represented by 26 bits, the specific position may refer to the last four bits in the 26 bits.

Here, the hash operation may be performed on the stream identifier of the data stream to obtain the hash value with a preset length. For data streams with different stream identifiers, different hash values are obtained, and corresponding virtual SPI identifiers are different.

In practical applications, the sender also needs to encrypt each message in the data stream before sending the data stream to the receiver.

Based on this, in an exemplary embodiment, the method may further include that: each message in the data stream is encrypted to obtain each encrypted message.

Here, the sender may encrypt each message in the data stream according to the encryption algorithm determined during IPSec SA negotiation with the receiver.

In operation 402, each encrypted message in the data stream is encapsulated with the virtual SPI identifier.

Here, for improving the processing performance of the IPSec tunnel, the sender may use multiple encryption units to encrypt each message in the data stream and encapsulate the encrypted message with the virtual SPI identifier.

In operation 403, the data stream is transmitted to a receiver through the IPSec tunnel, wherein the virtual SPI identifier is used for the receiver to transmit each encrypted message in the data stream to a same encryption unit for decryption processing.

An embodiment of the present application provides a data transmission method, which is applied to a receiver. As shown in Fig. 5, the method includes the following operations.

In operation 501, a data stream sent by a sender through an IPSec tunnel is received, wherein each message in the data stream contains a virtual SPI identifier.

The virtual SPI identifier is determined by the sender according to a stream identifier of the data stream and an SPI identifier of the IPSec tunnel through which the data stream is transmitted.

Here, multiple IPSec tunnels may be established between the sender and the receiver, and are uniquely identified with SPI identifiers. The receiver allocates multiple decryption units to each IPSec tunnel.

In operation 502, each message in the data stream is input, according to the virtual SPI identifier, into the same decryption unit for decryption processing.

Here, the receiver inputs, according to the virtual SPI identifier, each message in the data stream into the same decryption unit in multiple decryption units for decryption processing.

In practical applications, for improving the processing performance of the IPSec tunnel, the receiver may include multiple decryption units. The receiver may input messages with the same virtual SPI identifier into the same decryption unit for decryption processing according to the virtual SPI identifiers, to avoid aggravation of a message disorder due to processing of the multiple decryption units. The messages with the same virtual SPI identifier belong to the same data stream, and are processed by the same decryption unit.

Based on this, in an exemplary embodiment, the operation that each message in the data stream is input, according to the virtual SPI identifier, into the same decryption unit for decryption processing includes that: the messages with the same virtual SPI identifier are input into the same decryption unit for decryption processing.

In some exemplary implementations, the virtual SPI identifiers of respective messages in the data stream may be compared, and messages with the same virtual SPI identifier are input into the same decryption unit in the multiple decryption units for decryption processing.

With adoption of the solution of the embodiment of the present application, the sender sends each message containing the virtual SPI identifier to the receiver, and then the receiver may input each message with the same virtual SPI identifier into the same decryption unit for decryption processing based on the virtual SPI identifier contained in each message. As such, the condition that the multiple decryption units corresponding to the same IPSec tunnel simultaneously process the messages to aggravate a message disorder may be avoided.

An embodiment of the present application provides a data transmission method, which is applied to a sender. As shown in Fig. 6, the method includes the following operations.

In operation 601, a distinguishing identifier of a data stream is determined.

The distinguishing identifier of the data stream may consist of a quintuple and at least one of the following information: Layer 2 (L2) information, L3 information, Layer 4 (L4) information, Layer 5 (L5) information, Layer 6 (L6) information, and Layer 7 (L7) information. The distinguishing identifier can uniquely distinguish the data stream.

Here, the quintuple may include a source IP address, a destination IP address, a source port number, a destination port number, and a protocol number. L2 to L7 are layers defined by an Open System Interconnection (OSI) reference model. The L2 information may include link related information. The L3 information may include an IP address. The L4 information may include protocol information, for example, a Transmission Control Protocol (TCP) and a User Datagram Protocol (UDP). The L5 information may include session layer related information, for example, a Quality of Service (QoS) parameter. The L6 information may include a data format, for example, an American Standard Code for Information Interchange (ASCII) format. The L7 information may include an application type of the data stream. The application type includes, but not limited to, a Hyper Text Transfer Protocol (HTTP) application type, a Real-time Transport Protocol (RTP) application type, etc.

In some exemplary implementations, the distinguishing identifier of the data stream may be obtained by putting the quintuple before at least one of the L2 to L7 information.

In operation 602, a child IPSec tunnel used for transmission of the data stream is determined according to a mapping relationship between a distinguishing identifier of a data stream and an SPI identifier of a child IPSec tunnel.

In practical applications, for meeting a requirement on the 5G data transmission rate, multiple child IPSec tunnels may be established between the sender and a receiver, and are uniquely identified with SPI identifiers. One decryption unit is allocated to one child IPSec tunnel at the receiver.

Here, before the sender transmits the data stream, the sender also needs to negotiate with the receiver about an IKE SA and a child SA to determine the child IPSec tunnel to be used for transmission of the data stream, namely a child IPSec security policy including the mapping relationship between the distinguishing identifier of the data stream and the SPI identifier of the child IPSec tunnel is established.

Based on this, in an exemplary embodiment, the method may further include that: child SA negotiation is performed with the receiver; and the child IPSec tunnel is established. A child IPSec tunnel security policy is established in a process of establishing the child IPSec tunnel, and the child IPSec tunnel security policy includes the mapping relationship between the distinguishing identifier of the data stream and the SPI identifier of the child IPSec tunnel.

Here, a negotiation content of child SA negotiation between the sender and the receiver may include an encapsulation mode, an encryption algorithm, an encryption key, an authentication algorithm, an authentication key, etc., used at two ends of the tunnel.

In operation 603, the data stream is transmitted to a receiver through the determined child IPSec tunnel.

Here, each encrypted message in the data stream is transmitted through the determined child IPSec tunnel to a decryption unit, corresponding to the child IPSec tunnel, of the receiver for decryption processing.

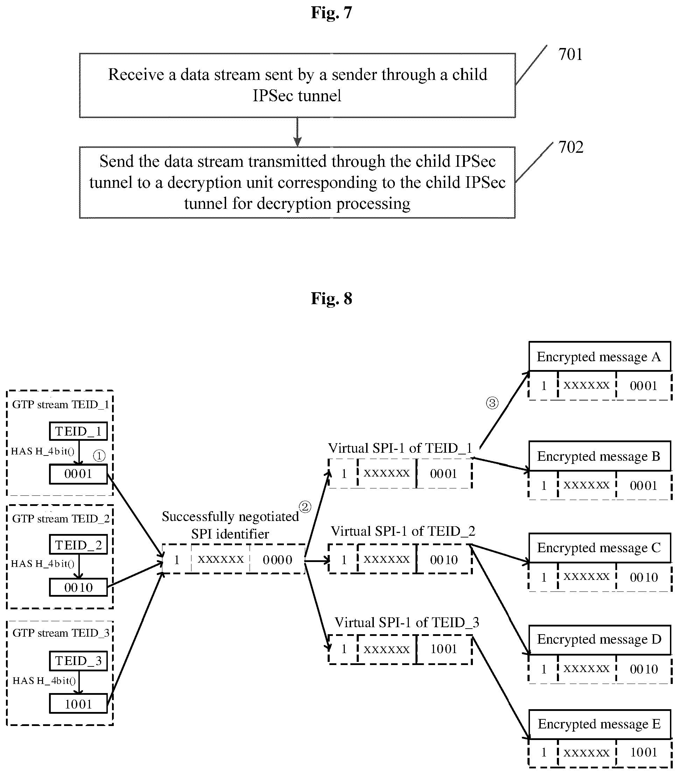

An embodiment of the present application provides a data transmission method, which is applied to a receiver. As shown in Fig. 7, the method includes the following operations.

In operation 701, a data stream sent by a sender through a child IPSec tunnel is received.

The child IPSec tunnel is determined by the sender according to a mapping relationship between a distinguishing identifier of a data stream and an SPI identifier of a child IPSec tunnel.

In operation 702, the data stream transmitted through the child IPSec tunnel is sent to a decryption unit corresponding to the child IPSec tunnel for decryption processing.

Here, for meeting a requirement on the 5G data transmission rate, multiple child IPSec tunnels may be established between the sender and the receiver, and are uniquely identified with SPI identifiers. One decryption unit is allocated to one child IPSec tunnel at the receiver.

Here, a process of negotiation between the sender and the receiver about establishment of the child IPSec tunnel has been described above in detail, and will not be elaborated herein.

With adoption of the solution of the embodiment of the present application, one decryption unit is allocated to one child IPSec tunnel at the receiver, and as such, the receiver may transmit each message in the data stream to the decryption unit corresponding to the child IPSec tunnel for decryption processing. Therefore, a message disorder caused by IPSec transmission of the messages may be avoided. In addition, multiple child IPSec tunnels may be established between the receiver and the sender to process multiple data streams at the same time, so that the processing capability of an IPSec tunnel is improved, and the requirement on the 5G data transmission rate can further be met.

The present application will further be described below in combination with application embodiments in detail.

### Application embodiment 1

In the application embodiment, a receiver transmits, according to the virtual SPI identifier, General Packet Radio Service (GPRS) Tunneling Protocol (GTP) messages with the same virtual SPI identifier to the same decryption unit in multiple decryption units for decryption processing.

In addition, in the application embodiment, multiple decryption units are allocated to one IPSec tunnel at the receiver. A sender is represented by gateway A, and the receiver is represented by gateway B. For example, in a 5G network, gateway A is deployed on a DU side, and gateway B is deployed on a CU side.

GTP is a commonly used protocol in a telecommunication network. There is made a high order-preserving requirement in a GTP message transmission process of the 5G network. If a message disorder is aggravated in the transmission process, the processing performance may be reduced, and service experiences may even be affected seriously. A process of IPSec tunnel negotiation between gateway A and gateway B and a process of negotiating about the virtual SPI supporting capability may refer to the above descriptions, and will not be elaborated herein.

Fig. 8 is a schematic diagram of encapsulating a virtual SPI identifier by gateway A before sending a data message using an IPSec tunnel. Beforehand, there is made such a hypothesis that gateway A and gateway B have negotiated about a virtual SPI supporting capability and both have the virtual SPI supporting capability. As shown in Fig. 8, it is assumed that there are three GTP data streams, and corresponding stream identifiers are represented by TEID_1, TEID_2, and TEID_3 respectively. After receiving the GTP data streams, gateway A determines a SPI identifier of an IPSec tunnel that bears the GTP data streams at first according to an IPSec security policy. Then, for TEID_1, gateway A extracts a hash value of last four bits using a HASH algorithm to obtain 0001, sets the last four bits of the SPI identifier corresponding to TEID_1 to 0001 to obtain a virtual SPI identifier (represented by SPI-1), performs encryption processing on messages belonging to TEID_1, and then encapsulates the messages with SPI-1. For TEID_2, a hash value 0010 is obtained using the HASH algorithm, last four bits of the SPI identifier corresponding to TEID_2 are set to the hash value 0010 to obtain a virtual SPI identifier (represented by SPI-2), encryption processing is performed on messages belonging to TEID_2, and the messages are encapsulated with SPI-2. For TEID_3, a hash value 1001 is obtained using the HASH algorithm, last four bits of the SPI identifier corresponding to TEID_3 are set to the hash value 1001 to obtain a virtual SPI identifier (represented by SPI-3), encryption processing is performed on messages belonging to TEID_3, and the messages are encapsulated with SPI-3. Gateway A sends the encapsulated encrypted messages to gateway B.

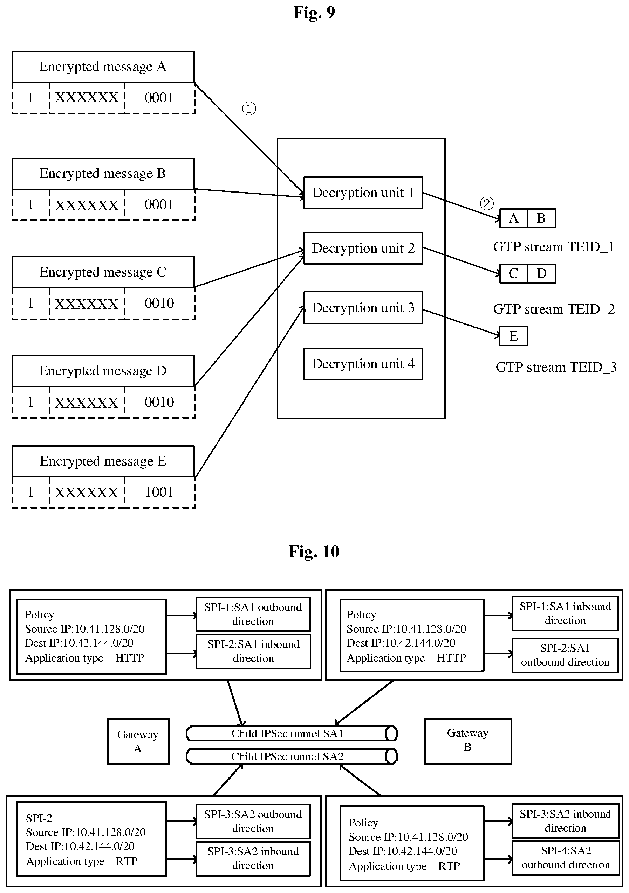

Fig. 9 is a schematic diagram of performing encryption processing by gateway B after receiving the encrypted messages. As shown in Fig. 9, gateway B receives the three GTP data streams sent by gateway A through the IPSec tunnel, and distributes the GTP messages with the same virtual SPI identifier to the same decryption unit for decryption processing.

In some exemplary implementations, message A and message B with "0001" are distributed to decryption unit 1 for decryption processing. Message C and message D with "0010" are distributed to decryption unit 2 for decryption processing. Message E with "1001" is distributed to decryption unit 3 for decryption processing. Each decryption unit sends the decrypted message to a destination according to a destination address.

Here, each encrypted message contains a virtual SPI identifier, so that gateway B can process the encrypted messages containing the same virtual SPI identifier through the same decryption unit in multiple decryption units, the problem that multiple decryption processing units corresponding to the same IPSec tunnel simultaneously process the messages to aggravate a disorder can be solved, and the processing performance of a single IPSec tunnel is also improved.

### Application embodiment 2

In the application embodiment, a receiver transmits each message of a received data stream to a decryption unit corresponding to a child IPSec tunnel for decryption processing.

In addition, in the application embodiment, one decryption unit is allocated to one child IPSec tunnel at the receiver. A sender is represented by gateway A, and the receiver is represented by gateway B. For example, in a 5G network, gateway A is deployed on a DU side, and gateway B is deployed on a CU side.

A process of negotiation between gateway A and gateway B about establishment of a child IPSec tunnel refers to the above descriptions, and will not be elaborated herein. Two child IPSec tunnels (represented by SA1 and SA2) are deployed between gateway A and gateway B to protect secure transmission for data communication between a device of which an address field is 10.41.128.0/20 and a device of which an address field is 10.42.144.0/20. A distinguishing identifier of a data stream is represented by a quintuple and L7 information. A mapping relationship between the distinguishing identifiers of the data stream and the two child IPSec tunnels is that the quintuple and the HTTP application type correspond to SA1 and the quintuple and the RTP application type correspond to SA2.

Here, gateway A performs child SA1 negotiation with gateway B to establish child IPSec tunnel SA1. A negotiation process refers to an IPSec negotiation process. The negotiation process includes establishment of a security policy for child IPSec tunnel SA1, and a mapping relationship between the distinguishing identifier of the data stream, i.e., the quintuple and the HTTP application type, and an SPI of SA1 is established. Gateway A performs child SA2 negotiation with gateway B to establish child IPSec tunnel SA2, a negotiation process includes establishment of a security policy for child IPSec tunnel SA2, and a mapping relationship between the distinguishing identifier of the data stream, i.e., the quintuple and the RTP application type, and an SPI of SA2 is established.

Fig. 10 is a schematic diagram of transmitting a data stream through a child IPSec tunnel. As shown in Fig. 10, when receiving the data stream, gateway A detects and identifies an application type of a message of the data stream by Deep Packet Inspection (DPI), and if the identified application type is the HTTP application type, selects SA1 according to the security policy to send each message in the data stream to gateway B. Gateway B performs decryption processing on each message in the data stream through a decryption unit corresponding to SA1, and forwards the message to a destination IP address. If it is detected and identified by DPI that the application type of the message of the data stream is the RTP application type, SA2 is selected according to the security policy to send each message in the data stream to gateway B. Gateway B performs decryption processing on each message in the data stream through a decryption unit corresponding to SA2, and forwards the message to the destination IP address.

Here, gateway B may transmit, through the child IPSec tunnel, each message corresponding to the same stream identifier to the decryption unit corresponding to the child IPSec tunnel for decryption processing. Therefore, the problem of message disorder caused by IPSec transmission of the messages can be solved.

In addition, multiple child IPSec tunnels are established to process multiple data streams at the same time, so that the processing capability of the IPSec tunnel is improved, and the requirement on the 5G data transmission rate can further be met.

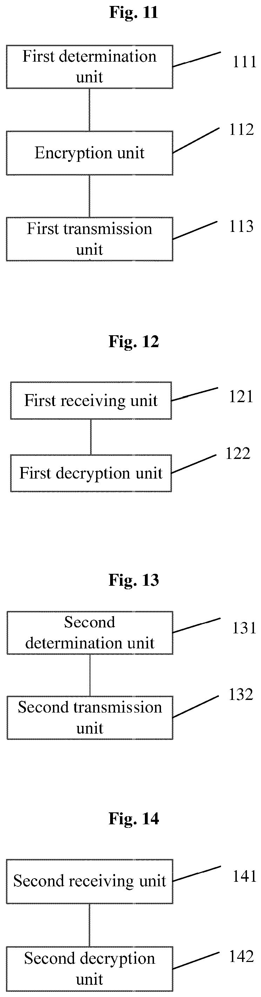

In order to implement the method of the embodiments of the present application, an embodiment of the present application provides a data transmission apparatus, which is arranged in a sender and, as shown in Fig. 11, includes:
a first determination unit 111, configured to determine a virtual SPI identifier according to a stream identifier of a data stream and an SPI identifier of an IPSec tunnel through which the data stream is transmitted;
an encryption unit 112, configured to add the virtual SPI identifier in each encrypted message in the data stream; and
a first transmission unit 113, configured to transmit the data stream to a receiver through the IPSec tunnel, wherein the virtual SPI identifier is used for the receiver to transmit each encrypted message in the data stream to a same encryption unit for decryption processing.

Here, for ensuring the security of data transmission, multiple IPSec tunnels may be established between the sender and the receiver, and are uniquely identified with SPI identifiers. The receiver allocates multiple decryption units to each IPSec tunnel.

In practical applications, if the sender determines that the receiver has the virtual SPI supporting capability, the sender, before transmitting the data stream to the receiver, may fill a field of the SPI with a hash value obtained by hashing the stream identifier of the data stream to obtain the virtual SPI identifier.

The first determination unit 111 is configured to perform a hash operation on the stream identifier of the data stream to obtain a hash value, and set a field of the SPI identifier according to the obtained hash value to obtain the virtual SPI identifier.

Here, a field at a specific position in the SPI identifier may be set according to the obtained hash value. For example, if the SPI identifier may be represented by 26 bits, the specific position may refer to the last four bits in the 26 bits.

Here, before the virtual SPI identifier is determined, the sender also needs to negotiate with the receiver about a virtual SPI supporting capability to determine whether the receiver has the virtual SPI supporting capability.

Based on this, in an exemplary embodiment, the apparatus may further include a judgment unit, configured to judge whether the receiver has a virtual SPI supporting capability, and in a case where the receiver has the virtual SPI supporting capability, determine the virtual SPI identifier according to the stream identifier of the data stream and the SPI identifier of the IPSec tunnel through which the data stream is transmitted.

Here, before whether the receiver has the virtual SPI supporting capability is judged, the sender also needs to negotiate with the receiver about an IKE SA and an IPSec SA to determine the IPSec tunnel to be used for transmission of the data stream, namely an IPSec security policy is established, and the IPSec security policy includes a mapping relationship between the stream identifier of the data stream and the SPI identifier of the IPSec tunnel.

Based on this, in an exemplary embodiment, the apparatus may further include a first negotiation unit, configured to perform IPSec tunnel negotiation with the receiver, and establish the IPSec tunnel.

An IPSec security policy is established in a process of establishing the IPSec tunnel, and the IPSec security policy includes a mapping relationship between the stream identifier of the data stream and the SPI identifier of the IPSec tunnel.

In some exemplary implementations, an ACL is created for the data stream, the ACL including the stream identifier of the data stream, and the mapping relationship between the stream identifier of the data stream and the SPI identifier of the IPSec tunnel is established.

Here, a negotiation content of IPSec SA negotiation between the sender and the receiver may include an encapsulation mode, an encryption algorithm, an encryption key, an authentication algorithm, an authentication key, etc., used at two ends of the tunnel.

In practical applications, the sender also needs to encrypt each encrypted message in the data stream before sending the data stream to the receiver.

Based on this, in an exemplary embodiment, the encryption unit 112 is configured to encrypt each message in the data stream to obtain each encrypted message.

In practical applications, the first determination unit 111, the encryption unit 112, the first transmission unit 113, the judgment unit, and the first negotiation unit may be implemented by a processor in the data transmission apparatus.

In order to implement the method of the embodiments of the present application, an embodiment of the present application provides a data transmission apparatus, which is arranged in a receiver and, as shown in Fig. 12, includes:
a first receiving unit 121, configured to receive a data stream sent by a sender through an IPSec tunnel, wherein each message in the data stream contains a virtual SPI identifier, and the virtual SPI identifier is determined by the sender according to a stream identifier of the data stream and an SPI identifier of the IPSec tunnel through which the data stream is transmitted; and
a first decryption unit 122, configured to input, according to the virtual SPI identifier, each message in the data stream into a same decryption unit in multiple decryption units for decryption processing.

Here, multiple IPSec tunnels may be established between the sender and the receiver, and are uniquely identified with SPI identifiers. The receiver allocates multiple decryption units to each IPSec tunnel.

In practical applications, for improving the processing performance of the IPSec tunnel, the receiver may include multiple decryption units. The receiver may transmit, according to virtual SPI identifiers, messages with the same virtual SPI identifier to the same decryption unit for decryption processing, to avoid aggravation of a message disorder due to processing of the multiple decryption units. The messages with the same virtual SPI identifier belong to the same data stream, and are processed by the same decryption unit.

Based on this, in an exemplary embodiment, the first decryption unit 122 is configured to input the messages with the same virtual SPI identifier into the same decryption unit for decryption processing.

In some exemplary implementations, the first decryption unit 122 may compare the virtual SPI identifiers of respective messages in the data stream, and transmit each message with the same virtual SPI identifier to the same decryption unit for decryption processing.

In practical applications, the first receiving unit 121 and the first decryption unit 122 may be implemented by a processor in the data transmission apparatus.

In order to implement the method of the embodiments of the present application, an embodiment of the present application provides a data transmission apparatus, which is arranged in a sender and, as shown in Fig. 13, includes:
a second determination unit 131, configured to determine a distinguishing identifier of a data stream, and determine a child IPSec tunnel used for transmission of the data stream according to a mapping relationship between a distinguishing identifier of a data stream and an SPI identifier of a child IPSec tunnel; and
a second transmission unit 132, configured to transmit the data stream to a receiver through the determined child IPSec tunnel.

The distinguishing identifier of the data stream may consist of a quintuple and at least one of the following information: L2 information, L3 information, L4 information, L5 information, L6 information, or L7 information. The distinguishing identifier may uniquely distinguish the data stream.

Here, the quintuple may include a source IP address, a destination IP address, a source port number, a destination port number, and a protocol number. L2 to L7 are layers defined by an OSI reference model. The L2 information may include link related information. The L3 information may include an IP address. The L4 information may include protocol information, for example, a TCP and a UDP. The L5 information may include session layer related information, for example, a Quality of Service (QoS) parameter. The L6 information may include a data format, for example, an ASCII format. The L7 information may include an application type of the data stream. The application type includes, but not limited to, an HTTP application type, an RTP application type, etc.

In practical applications, for meeting a requirement on the 5G data transmission rate, multiple child IPSec tunnels may be established between the sender and a receiver, and are uniquely identified with SPI identifiers. One decryption unit is allocated to one child IPSec tunnel at the receiver.

Here, before the sender transmits the data stream, the sender also needs to negotiate with the receiver about an IKE SA and a child SA to determine the child IPSec tunnel to be used for transmission of the data stream, namely a child IPSec security policy is established, including the mapping relationship between the distinguishing identifier of the data stream and the SPI identifier of the child IPSec tunnel.

Based on this, in an exemplary embodiment, the apparatus may further include a second negotiation unit, configured to perform child SA negotiation with the receiver, and establish the child IPSec tunnel.

A child IPSec tunnel security policy is established in a process of establishing the child IPSec tunnel, and the child IPSec tunnel security policy includes the mapping relationship between the distinguishing identifier of the data stream and the SPI identifier of the child IPSec tunnel.

Here, a negotiation content of child SA negotiation between the sender and the receiver may include an encapsulation mode, an encryption algorithm, an encryption key, an authentication algorithm, an authentication key, etc., used at two ends of the tunnel.

Here, the data stream is transmitted to a decryption unit, corresponding to the child IPSec tunnel, of the receiver for decryption processing through the determined child IPSec tunnel.

In practical applications, the second determination unit 111, the second transmission unit 131, and the second negotiation unit may be implemented by a processor in the data transmission apparatus.

In order to implement the method of the embodiments of the present application, an embodiment of the present application provides a data transmission apparatus, which is arranged in a receiver and, as shown in Fig. 14, includes:
a second receiving unit 141, configured to receive a data stream sent by a sender through a child IPSec tunnel, wherein the child IPSec tunnel is determined by the sender according to a mapping relationship between a distinguishing identifier of a data stream and an SPI identifier of a child IPSec tunnel; and
a second decryption unit 142, configured to send the data stream transmitted through the child IPSec tunnel to a decryption unit corresponding to the child IPSec tunnel for decryption processing.

Here, for meeting a requirement on the 5G data transmission rate, multiple child IPSec tunnels may be established between the sender and the receiver, and are uniquely identified with SPIs. One decryption unit is allocated to one child IPSec tunnel at the receiver.

In practical applications, the second receiving unit 121 may be implemented by a communication interface in the data transmission apparatus. The second decryption unit 142 may be implemented by a processor in the data transmission apparatus.

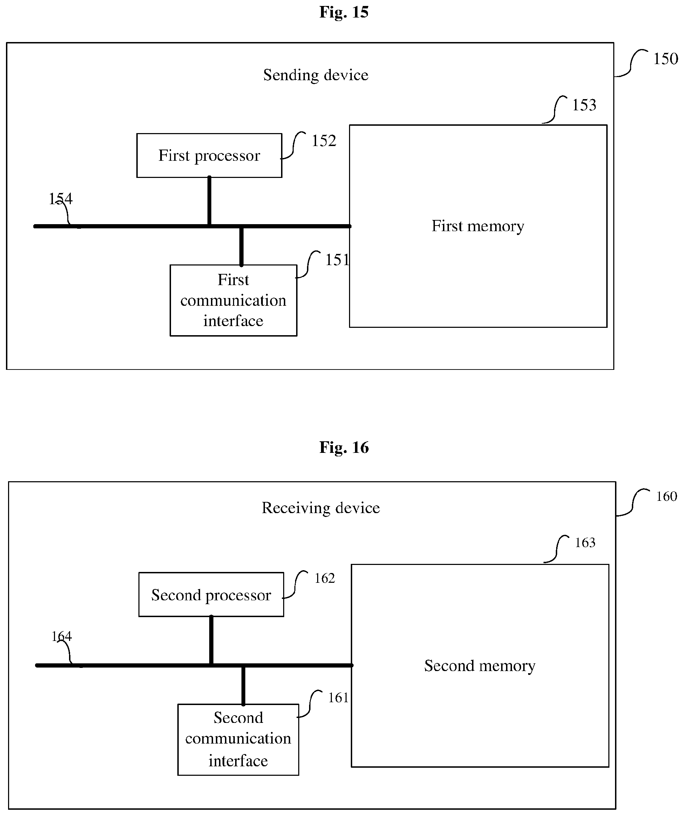

Based on hardware implementation of the abovementioned program modules, for implementing the method for a sender side in the embodiments of the present application, an embodiment of the present application provides a sending device. As shown in Fig. 15, the intelligent device 150 includes a first communication interface 151, a first processor 152, and a first memory 153.

The first communication interface 161 is configured to perform information interaction with another device.

The first processor 152 is connected with the first communication interface 151 to implement information interaction with a radio network access device, and is configured to run a computer program to execute the method provided in one or more technical solutions for the intelligent device side. The computer program is stored in the first memory 153.

Of course, in practical applications, each component in the intelligent device 150 is coupled through a bus system 154. It can be understood that the bus system 154 is configured to implement connection communication between these components. The bus system 154 includes a data bus, and also includes a power bus, a control bus, and a state signal bus. However, for clear description, various buses in Fig. 15 are marked as the bus system 154.

In the embodiment of the present application, the first memory 153 is configured to store various types of data to support operations of the intelligent device 150. Examples of the data include any computer program operated in the intelligent device 150.

The method disclosed in the embodiments of the present application may be applied to the first processor 152, or implemented by the first processor 152. The first processor 152 may be an integrated circuit chip, and has a signal processing capability. In an implementation process, each operation of the method may be completed through an integrated logic circuit in a hardware form in the first processor 152 or an instruction in a software form. The first processor 152 may be a general-purpose processor, a Digital Signal Processor (DSP), or another Programmable Logic Device (PLD), a discrete gate or transistor logic device, a discrete hardware component, etc. The first processor 152 may implement or execute each method, operation, and logic block diagram disclosed in the embodiments of the present application. The general-purpose processor may be a microprocessor, or any conventional processor, etc. The operations of the method disclosed in combination with the embodiments of the present application may be directly embodied to be executed and completed by a hardware decoding processor or executed and completed by a combination of hardware and software modules in the decoding processor. The software module may be in a storage medium, and the storage medium is in the first memory 153. The first processor 152 reads information from the first memory 153, and completes the operations of the abovementioned method in combination with hardware thereof.

In an exemplary embodiment, the sending device 150 may be implemented by one or more Application Specific Integrated Circuits (ASICs), DSPs, PLDs, Complex Programmable Logic Devices (CPLDs), Field-Programmable Gate Arrays (FPGAs), general-purpose processors, controllers, Micro Controller Units (MCUs), microprocessors, or other electronic components, and is configured to execute the abovementioned methods.

Based on hardware implementation of each program module, for implementing the method for a receiver side in the embodiments of the present application, as shown in FIG. 16, a receiving device 160 includes:
a second communication interface 161, configured to perform information interaction with another device; and
a second processor 162, connected with the second communication interface 161 to implement information interaction with a radio network access device and configured to run a computer program to execute the method provided in one or more technical solutions for the radio network access device side. The computer program is stored in a second memory 163.

Of course, in practical applications, each component in the radio network access device 160 is coupled through a bus system 164. It can be understood that the bus system 164 is configured to implement connection communication between these components. The bus system 164 includes a data bus and also includes a power bus, a control bus and a state signal bus. However, for clear description, various buses in Fig. 16 are marked as the bus system 164.

In the embodiment of the present application, the second memory 163 is configured to store various types of data to support operations of the radio network access device 160. Examples of the data include any computer program operated in the radio network access device 160.

The method disclosed in the embodiments of the present application may be applied to the second processor 162 or implemented by the second processor 162. The second processor 162 may be an integrated circuit chip with a signal processing capability. In an implementation process, each operation of the method may be completed by an integrated logic circuit in a hardware form in the second processor 162 or an instruction in a software form. The second processor 162 may be a general-purpose processor, a DSP or another PLD, a discrete gate or transistor logic device, a discrete hardware component, etc. The second processor 162 may implement or execute each method, operation, and logical block diagram disclosed in the embodiments of the present application. The general-purpose processor may be a microprocessor, or any conventional processor, etc. The operations of the method disclosed in combination with the embodiments of the present application may be directly embodied to be executed and completed by a hardware decoding processor or executed and completed by a combination of hardware and software modules in the decoding processor. The software module may be in a storage medium, and the storage medium is in the second memory 163. The second processor 162 reads information in the second memory 163, and completes the operations of the method in combination with hardware.

In an exemplary embodiment, the receiving device 160 may be implemented by one or more ASICs, DSPs, PLDs, CPLDs, FPGAs, general-purpose processors, controllers, MCUs, microprocessors, or other electronic components, and is configured to execute the abovementioned method.

It can be understood that the memory (the first memory 153 and the second memory 163) in the embodiments of the present application may be a volatile memory or a nonvolatile memory, and may also include both the volatile and nonvolatile memories. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk, or a Compact Disc Read-Only Memory (CD-ROM). The magnetic surface memory may be a disk memory or a tape memory. The volatile memory may be a Random Access Memory (RAM), and is used as an external high-speed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory described in the embodiments of the present application is intended to include, but not limited to, memories of these and any other proper types.

It is to be noted that "first", "second" and the like are adopted to distinguish similar objects and not intended to describe a specific sequence or order.

In addition, the technical solutions recorded in the embodiments of the present application may be freely combined without conflicts.

The above is only the exemplary embodiment of the present application and not intended to limit the scope of protection of the present application.

### Industrial Applicability

As described above, the data transmission method and apparatus, related device, and storage medium provided in the embodiments of the present application have the following beneficial effects. The sender sends each message containing the virtual SPI identifier to the receiver, and then the receiver can input the messages with the same virtual SPI identifier into the same decryption unit for decryption processing. As such, the problem of message disorder can be solved, and meanwhile, the processing performance of the IPSec tunnel can be improved.

## Claims

1. A data transmission method, applied to a sender, **characterized by** comprising:
determining (401) a virtual Security Parameter Index, SPI, identifier according to a stream identifier of a data stream and an SPI identifier of an Internet Protocol Security, IPSec, tunnel through which the data stream is transmitted;
adding (402) the virtual SPI identifier in each encrypted message in the data stream; and
transmitting (403) the data stream to a receiver through the IPSec tunnel, wherein the virtual SPI identifier is used for the receiver to transmit each encrypted message in the data stream to a same encryption unit for decryption processing;
wherein before determining (401) the virtual SPI identifier according to the stream identifier of the data stream and the SPI identifier of the IPSec tunnel through which the data stream is transmitted, further comprising: judging whether the receiver has a virtual SPI supporting capability; and in a case where the receiver has the virtual SPI supporting capability, determining the virtual SPI identifier according to the stream identifier of the data stream and the SPI identifier of the IPSec tunnel through which the data stream is transmitted.

2. The method according to claim 1, wherein determining (401) the virtual SPI identifier according to the stream identifier of the data stream and the SPI identifier of the IPSec tunnel through which the data stream is transmitted comprises:
performing a hash operation on the stream identifier of the data stream to obtain a hash value; and
setting a field of the SPI identifier according to the obtained hash value to obtain the virtual SPI identifier.

3. The method according to claim 1, before determining (401) the virtual SPI identifier according to the stream identifier of the data stream and the SPI identifier of the IPSec tunnel through which the data stream is transmitted, further comprising:
negotiating with the receiver about a virtual SPI supporting capability, wherein negotiating with the receiver about the virtual SPI supporting capability comprises:
setting a first bit of the SPI identifier of the IPSec tunnel through which the data stream is transmitted to represent whether the sender has the virtual SPI supporting capability;
sending the SPI identifier to the receiver;
receiving, from the receiver, the SPI identifier of the IPSec tunnel, wherein a first bit of the SPI identifier of the IPSec tunnel is set by the receiver to represent whether the receiver has the virtual SPI supporting capability; and
determining whether the receiver has the virtual SPI supporting capability according to the SPI identifier received from the receiver.

4. The method according to claim 1, before determining (401) the virtual SPI identifier according to the stream identifier of the data stream and the SPI identifier of the IPSec tunnel through which the data stream is transmitted, further comprising:
performing IPSec Security Association, SA, negotiation with the receiver, and establishing the IPSec tunnel, wherein
an IPSec security policy is established in a process of establishing the IPSec tunnel, and the IPSec security policy comprises a mapping relationship between the stream identifier of the data stream and the SPI identifier of the IPSec tunnel.

5. A data transmission method, applied to a receiver, **characterized by** comprising:
receiving (501) a data stream sent by a sender through an Internet Protocol Security, IPSec, tunnel, wherein each message in the data stream contains a virtual Security Parameter Index, SPI, identifier, and the virtual SPI identifier is determined by the sender according to a stream identifier of the data stream and an SPI identifier of the IPSec tunnel through which the data stream is transmitted in a case where the receiver has a virtual SPI supporting capability; and
inputting (502), according to the virtual SPI identifier, each message in the data stream into a same decryption unit for decryption processing.

6. The method according to claim 5, wherein inputting (502), according to the virtual SPI identifier, each message in the data stream into the same decryption unit for decryption processing comprises:
inputting the messages with the same virtual SPI identifier into the same decryption unit for decryption processing.

7. A data transmission method, applied to a sender, **characterized by** comprising:
determining (601) a distinguishing identifier of a data stream;
determining (602) a child Internet Protocol Security, IPSec, tunnel used for transmission of the data stream according to a mapping relationship between the distinguishing identifier of the data stream and a Security Parameter Index, SPI, identifier of a child IPSec tunnel; and
transmitting (603) the data stream to a receiver through the determined child IPSec tunnel, the data stream being transmitted through the determined child IPSec tunnel to a decryption unit, corresponding to the child IPSec tunnel, of the receiver for decryption processing.

8. The method according to claim 7, wherein the distinguishing identifier of the data stream consists of a quintuple and at least one of the following information:
Layer 2, L2, information, Layer 3, L3, information, Layer 4, L4, information, Layer 5, L5, information, Layer 6, L6, information, and Layer 7, L7, information.

9. The method according to claim 7, further comprising:
performing child Security Association, SA, negotiation with the receiver, and establishing the child IPSec tunnel, wherein
a child IPSec tunnel security policy is established in a process of establishing the child IPSec tunnel, and the child IPSec tunnel security policy comprises the mapping relationship between the distinguishing identifier of the data stream and the SPI identifier of the child IPSec tunnel.

10. A data transmission method, applied to a receiver, **characterized by** comprising:
receiving (701) a data stream sent by a sender through a child Internet Protocol Security, IPSec, tunnel; and
sending (702) the data stream transmitted through the child IPSec tunnel to a decryption unit corresponding to the child IPSec tunnel for decryption processing, wherein the decryption unit corresponding to the child IPSec tunnel comprises a decryption unit pre-configured for the child IPSec tunnel;
wherein the child IPSec tunnel is determined by the sender using a mapping relationship between a distinguishing identifier of the data stream and a SPI identifier of the child IPSec tunnel.

11. The method according to claim 10, further comprising:
performing child Security Association, SA, negotiation with the sender, and establishing the child IPSec tunnel.

12. A sending device (150), **characterized by** comprising a first processor (152) and a first memory (153) configured to store a computer program capable of running in the processor (152),
wherein the first processor (152) is configured to run the computer program to execute the operations of the method according to any one of claims 1-4 or execute the operations of the method according to any one of claims 7-9.

13. A receiving device (160), **characterized by** comprising a second processor (162) and a second memory (163) configured to store a computer program capable of running in the processor (162),
wherein the second processor (162) is configured to run the computer program to execute the operations of the method according to claim 5 or 6 or execute the operations of the method according to claim 10 or 11.

14. A storage medium, in which a computer program is stored, **characterized in that** the computer program is executed by a processor to implement the operations of the method according to any one of claims 1-4, or execute the operations of the method according to any one of claims 5-6, or execute the operations of the method according to any one of claims 7-9, or execute the operations of the method according to claim 10 or 11.

## Patentansprüche

1. Datenübertragungsverfahren, das einem Sender angewendet wird, **dadurch gekennzeichnet, dass** es umfasst:
Bestimmen (401) einer virtuellen Sicherheitsparameterindex, SPI, Kennung nach einer Stromkennung eines Datenstroms und einer SPI-Kennung eines Internet Protocol Sicherheit, IPSec, Tunnels, durch den der Datenstrom übertragen wird;
Hinzufügen (402) der virtuellen SPI-Kennung zu jeder verschlüsselten Nachricht in dem Datenstrom; und
Übertragen (403) des Datenstroms an einen Empfänger über den IPSec Tunnel, wobei die virtuelle SPI-Kennung für den Empfänger verwendet wird, um jede verschlüsselte Nachricht in dem Datenstrom einer gleichen Verschlüsselungseinheit zur Entschlüsselungsverarbeitung zu übertragen;
wobei vor Bestimmen (401) der virtuellen SPI-Kennung nach der Stromkennung des Datenstroms und der SPI-Kennung des IPSec-Tunnels, über den der Datenstrom übertragen wird, ferner umfassend: Schätzen, ob der Empfänger eine virtuelle SPI Unterstützungskapazität aufweist; und in einem Fall, wenn der Empfänger die virtuelle SPI Unterstützungskapazität aufweist, Bestimmen der virtuellen SPI-Kennung nach der Stromkennung des Datenstroms und der SPI-Kennung des IPSec-Tunnels, über den der Datenstrom übertragen wird.

2. Verfahren nach Anspruch 1, wobei Bestimmen (401) der virtuellen SPI-Kennung nach der Stromkennung des Datenstroms und der SPI-Kennung des IPSec-Tunnels, über den der Datenstrom übertragen wird, umfasst:
Ausführen eines Hash-Vorgangs auf die Stromkennung des Datenstroms, um einen Hash-Wert zu erhalten; und
Einstellen eines Feldes der SPI-Kennung nach dem erhaltenen Hash-Werts, um die virtuelle SPI-Kennung zu erhalten.

3. Verfahren nach Anspruch 1, wobei vor Bestimmen (401) der virtuellen SPI-Kennung nach der Stromkennung des Datenstroms und der SPI-Kennung des IPSec-Tunnels, über den der Datenstrom übertragen wird, ferner umfassend:
Aushandeln mit dem Empfänger eine virtuelle SPI Unterstützungskapazität, wobei Aushandeln mit dem Empfänger eine virtuelle SPI Unterstützungskapazität umfasst:
Einstellen eines ersten Bits der SPI-Kennung des IPSec-Tunnels, über den der Datenstrom übertragen wird, um anzuzeigen, ob der Sender eine virtuelle SPI Unterstützungskapazität aufweist;
Senden der SPI-Kennung an den Empfänger;
Empfangen, von dem Empfänger, der SPI-Kennung des IPSec-Tunnels, wobei ein erstes Bit der SPI-Kennung des IPSec-Tunnels von dem Empfänger eingestellt wird, um anzuzeigen, ob der Empfänger eine Unterstützungskapazität für virtuelle SPI aufweist; und
Bestimmen, ob der Empfänger eine virtuelle SPI Unterstützungskapazität nach der SPI Kennung aufweist, die von dem Empfänger empfangen wird.

4. Verfahren nach Anspruch 1, wobei vor Bestimmen (401) der virtuellen SPI-Kennung nach der Stromkennung des Datenstroms und der SPI-Kennung des IPSec-Tunnels, über den der Datenstrom übertragen wird, ferner umfassend:
Ausführen einer IPSec-Sicherheitszuordnung, SA, Verhandlung mit dem Empfänger und Festlegen des IPSec-Tunnels, wobei
eine IPSec-Sicherheitsrichtlinie in einem Prozess des Festlegens des IPSec-Tunnels festgelegt wird, und die IPSec-Sicherheitsrichtlinie eine Zuordnungsbeziehung zwischen der Stromkennung des Datenstroms und der SPI-Kennung des IPSec-Tunnels umfasst.

5. Datenübertragungsverfahren, das einem Empfänger angewendet wird, **dadurch gekennzeichnet, dass** es umfasst:
Empfangen (501) eines Datenstroms, der von einem Sender durch einen Internet Protocol Sicherheit, IPSec, Tunnel gesendet wird, wobei jede Nachricht in dem Datenstrom eine virtuelle Sicherheitsparameterindex, SPI, Kennung enthält, und die virtuelle SPI-Kennung von dem Sender nach einer Stromkennung des Datenstroms und einer SPI Kennung des IPSecTunnels, über den der Datenstrom übertragen wird, in einem Fall, wenn der Empfänger eine virtuelle SPI Unterstützungskapazität aufweist; bestimmt wird und
Eingeben (502), nach der virtuellen SPI Kennung, jeder Nachricht in dem Datenstrom in dieselbe Entschlüsselungseinheit zur Entschlüsselungsverarbeitung.

6. Verfahren nach Anspruch 5, wobei Eingeben (502), nach der virtuellen SPI Kennung, jeder Nachricht in dem Datenstrom in dieselbe Entschlüsselungseinheit zur Entschlüsselungsverarbeitung umfasst:
Eingeben der Nachrichten mit derselben virtuellen SPI Kennung in dieselbe Entschlüsselungseinheit zur Entschlüsselungsverarbeitung.

7. Datenübertragungsverfahren, das einem Sender angewendet wird, **dadurch gekennzeichnet, dass** es umfasst:
Bestimmen (601) einer unterscheidenden Kennung eines Datenstroms;
Bestimmen (602) eines untergeordneten Internet Protocol Sicherheit, IPSec, Tunnels, der zur Übertragung des Datenstroms nach einer Zuordnungsbeziehung zwischen dem unterscheidenden Kennung des Datenstroms und einer Sicherheitsparameterindex, SPI, Kennung eines untergeordneten IPSec-Tunnels verwendet wird; und
Übertragen (603) des Datenstroms an einen Empfänger über den bestimmten untergeordneten IPSec-Tunnel, wobei der Datenstrom über den bestimmten untergeordneten IPSec-Tunnel an eine dem untergeordneten IPSec-Tunnel entsprechende Entschlüsselungseinheit des Empfängers zur Entschlüsselungsverarbeitung übertragen wird.

8. Verfahren nach Anspruch 7, wobei die unterscheidende Kennung des Datenstroms aus einem Fünffache und mindestens einer der folgenden Informationen besteht:
Schicht-2-, L2-, Informationen, Schicht-3-, L3-, Informationen, Schicht-4-, L4-, Informationen, Schicht 5-, L5-, Informationen, Schicht-6-, L6-, Informationen und Schicht-7-, L7-, Informationen.

9. Verfahren nach Anspruch 7, ferner umfassend:
Ausführen einer untergeordneten Sicherheitszuordnung, SA, Verhandlung mit dem Empfänger und Festlegen des untergeordneten IPSecTunnels, wobei
eine Sicherheitsrichtlinie des untergeordneten IPSec Tunnels in einem Prozess des Festlegens des untergeordneten IPSec Tunnels festgelegt wird, und die Sicherheitsrichtlinie des untergeordneten IPSec Tunnels die Zuordnungsbeziehung zwischen der unterscheidenden Kennung des Datenstroms und der SPI-Kennung des untergeordneten IPSec Tunnels umfasst.

10. Datenübertragungsverfahren, das einem Empfänger angewendet wird, **dadurch gekennzeichnet, dass** es umfasst:
Empfangen (701) eines Datenstroms, der von einem Sender durch einen untergeordneten Internet Protocol Sicherheit, IPSec, Tunnel gesendet wird; und
Senden (702) des Datenstroms, der durch den untergeordneten IPSec Tunnel übertragen wird, an eine Entschlüsselungseinheit, die dem untergeordneten IPSecTunnel zur Entschlüsselungsverarbeitung entspricht, wobei die Entschlüsselungseinheit, die dem untergeordneten IPSec Tunnel entspricht, eine vorkonfigurierte Entschlüsselungseinheit für den untergeordneten IPSec Tunnel umfasst;
wobei der untergeordnete IPSec Tunnel von dem Sender durch Verwenden einer Zuordnungsbeziehung zwischen einer unterscheidenden Kennung des Datenstroms und einer SPI-Kennung des untergeordneten IPSec-Tunnels bestimmt wird.

11. Verfahren nach Anspruch 10, ferner umfassend:
Ausführen einer untergeordneten Sicherheitszuordnung, SA, Verhandlung mit dem Sender und Festlegen des untergeordneten IPSec Tunnels.

12. Sendevorrichtung (150), **dadurch gekennzeichnet, dass** sie einen ersten Prozessor (152) und einen ersten Speicher (153) umfasst, der dazu konfiguriert ist, ein Computerprogramm zu speichern, das in dem Prozessor (152) laufen kann,
wobei der erste Prozessor (152) dazu konfiguriert ist, das Computerprogramm zu laufen, um die Vorgänge des Verfahrens nach einem der Ansprüche 1 bis 4 oder die Vorgänge des Verfahrens nach einem der Ansprüche 7 bis 9 auszuführen.

13. Empfangsvorrichtung (160), **dadurch gekennzeichnet, dass** sie einen zweiten Prozessor (162) und einen zweiten Speicher (163) umfasst, der dazu konfiguriert ist, ein Computerprogramm zu speichern, das in dem Prozessor (162) laufen kann,
wobei der zweite Prozessor (162) dazu konfiguriert ist, dass das Computerprogramm zu laufen, um die Vorgänge des Verfahrens nach Anspruch 5 oder 6 oder die Vorgänge des Verfahrens nach Anspruch 10 oder 11 auszuführen.

14. Speichermedium, auf dem ein Computerprogramm gespeichert ist, **dadurch gekennzeichnet, dass** das Computerprogramm von einem Prozessor ausgeführt wird, um die Vorgänge des Verfahrens nach einem der Ansprüche 1 bis 4 zu implementieren, oder die Vorgänge des Verfahrens nach einem der Ansprüche 5 bis 6 auszuführen, oder die Vorgänge des Verfahrens nach einem der Ansprüche 7 bis 9 auszuführen, oder die Vorgänge des Verfahrens nach Anspruch 10 oder 11 auszuführen.

## Revendications

1. Un procédé de transmission de données, appliqué à un émetteur, **caractérisé en ce qu'**il comprend :
la détermination (401) d'un identifiant d'indice de paramètre de sécurité virtuel, SPI, selon un identifiant de flux d'un flux de données et un identifiant SPI d'un tunnel Internet Protocol Security, IPSec, par lequel le flux de données est transmis ;
l'ajout (402) de l'identifiant SPI virtuel dans chaque message chiffré du flux de données ; et
la transmission (403) du flux de données à un récepteur via le tunnel IPSec, dans lequel l'identifiant SPI virtuel est utilisé par le récepteur pour transmettre chaque message chiffré du flux de données à une même unité de chiffrement pour un traitement de déchiffrement ;
dans lequel, avant de déterminer (401) l'identifiant SPI virtuel selon l'identifiant de flux du flux de données et l'identifiant SPI du tunnel IPSec par lequel le flux de données est transmis, il comprend en outre : la vérification de la capacité du récepteur à prendre en charge un SPI virtuel ; et, dans le cas où le récepteur dispose de la capacité de prise en charge du SPI virtuel, la détermination de l'identifiant SPI virtuel selon l'identifiant de flux du flux de données et l'identifiant SPI du tunnel IPSec par lequel le flux de données est transmis.

2. Le procédé selon la revendication 1, dans lequel la détermination (401) de l'identifiant SPI virtuel selon l'identifiant de flux du flux de données et l'identifiant SPI du tunnel IPSec par lequel le flux de données est transmis comprend :
l'exécution d'une opération de hachage sur l'identifiant de flux du flux de données pour obtenir une valeur de hachage ; et
la définition d'un champ de l'identifiant SPI selon la valeur de hachage obtenue pour obtenir l'identifiant SPI virtuel.

3. Le procédé selon la revendication 1, dans lequel, avant de déterminer (401) l'identifiant SPI virtuel selon l'identifiant de flux du flux de données et l'identifiant SPI du tunnel IPSec par lequel le flux de données est transmis, il comprend en outre :
la négociation avec le récepteur concernant une capacité de prise en charge du SPI virtuel, dans laquelle la négociation avec le récepteur concernant la capacité de prise en charge du SPI virtuel comprend :
la définition d'un premier bit de l'identifiant SPI du tunnel IPSec par lequel le flux de données est transmis pour représenter si l'émetteur a la capacité de prise en charge du SPI virtuel ;
l'envoi de l'identifiant SPI au récepteur ;
la réception, en provenance du récepteur, de l'identifiant SPI du tunnel IPSec, dans lequel un premier bit de l'identifiant SPI du tunnel IPSec est défini par le récepteur pour représenter si le récepteur a la capacité de prise en charge du SPI virtuel ; et
la détermination de la capacité du récepteur à prendre en charge le SPI virtuel selon l'identifiant SPI reçu du récepteur.

4. Le procédé selon la revendication 1, dans lequel, avant de déterminer (401) l'identifiant SPI virtuel selon l'identifiant de flux du flux de données et l'identifiant SPI du tunnel IPSec par lequel le flux de données est transmis, il comprend en outre :
l'exécution d'une négociation d'association de sécurité IPSec, SA, avec le récepteur, et l'établissement du tunnel IPSec, dans lequel
une politique de sécurité IPSec est établie dans un processus d'établissement du tunnel IPSec, et la politique de sécurité IPSec comprend une relation de correspondance entre l'identifiant de flux du flux de données et l'identifiant SPI du tunnel IPSec.

5. Un procédé de transmission de données, appliqué à un récepteur, **caractérisé en ce qu'**il comprend :
la réception (501) d'un flux de données envoyé par un émetteur via un tunnel Internet Protocol Security, IPSec, dans lequel chaque message du flux de données contient un identifiant d'indice de paramètre de sécurité virtuel, SPI, et l'identifiant SPI virtuel est déterminé par l'émetteur selon un identifiant de flux du flux de données et un identifiant SPI du tunnel IPSec par lequel le flux de données est transmis, dans le cas où le récepteur dispose d'une capacité de prise en charge du SPI virtuel ; et
l'entrée (502), selon l'identifiant SPI virtuel, de chaque message du flux de données dans une même unité de déchiffrement pour le traitement de déchiffrement.

6. Le procédé selon la revendication 5, dans lequel l'entrée (502), selon l'identifiant SPI virtuel, de chaque message du flux de données dans la même unité de déchiffrement pour le traitement de déchiffrement comprend :
l'entrée des messages ayant le même identifiant SPI virtuel dans la même unité de déchiffrement pour le traitement de déchiffrement.

7. Un procédé de transmission de données, appliqué à un émetteur, **caractérisé en ce qu'**il comprend :
la détermination (601) d'un identifiant distinctif d'un flux de données ;
la détermination (602) d'un tunnel enfant Internet Protocol Security, IPSec, utilisé pour la transmission du flux de données selon une relation de correspondance entre l'identifiant distinctif du flux de données et un identifiant d'indice de paramètre de sécurité, SPI, d'un tunnel IPSec enfant ; et
la transmission (603) du flux de données à un récepteur via le tunnel IPSec enfant déterminé, le flux de données étant transmis via le tunnel IPSec enfant déterminé à une unité de déchiffrement, correspondant au tunnel IPSec enfant, du récepteur pour le traitement de déchiffrement.

8. Le procédé selon la revendication 7, dans lequel l'identifiant distinctif du flux de données se compose d'un quintuple et d'au moins une des informations suivantes :
des informations de couche 2, L2, des informations de couche 3, L3, des informations de couche 4, L4, des informations de couche 5, L5, des informations de couche 6, L6, et des informations de couche 7, L7.

9. Le procédé selon la revendication 7, comprenant en outre :
l'exécution d'une négociation d'association de sécurité enfant, SA, avec le récepteur, et l'établissement du tunnel IPSec enfant, dans lequel
une politique de sécurité du tunnel IPSec enfant est établie dans un processus d'établissement du tunnel IPSec enfant, et la politique de sécurité du tunnel IPSec enfant comprend la relation de correspondance entre l'identifiant distinctif du flux de données et l'identifiant SPI du tunnel IPSec enfant.

10. Un procédé de transmission de données, appliqué à un récepteur, **caractérisé en ce qu'**il comprend :
la réception (701) d'un flux de données envoyé par un émetteur via un tunnel enfant Internet Protocol Security, IPSec ; et
l'envoi (702) du flux de données transmis via le tunnel IPSec enfant à une unité de déchiffrement correspondant au tunnel IPSec enfant pour le traitement de déchiffrement, dans lequel l'unité de déchiffrement correspondant au tunnel IPSec enfant comprend une unité de déchiffrement préconfigurée pour le tunnel IPSec enfant ;
dans lequel le tunnel IPSec enfant est déterminé par l'émetteur à l'aide d'une relation de correspondance entre un identifiant distinctif du flux de données et un identifiant SPI du tunnel IPSec enfant.

11. Le procédé selon la revendication 10, comprenant en outre :
l'exécution d'une négociation d'association de sécurité enfant, SA, avec l'émetteur, et l'établissement du tunnel IPSec enfant.

12. Un dispositif d'émission (150), **caractérisé en ce qu'**il comprend un premier processeur (152) et une première mémoire (153) configurée pour stocker un programme informatique apte à s'exécuter dans le processeur (152),
dans lequel le premier processeur (152) est configuré pour exécuter le programme informatique afin d'exécuter les opérations du procédé selon l'une quelconque des revendications 1 à 4 ou exécuter les opérations du procédé selon l'une quelconque des revendications 7 à 9.

13. Un dispositif de réception (160), **caractérisé en ce qu'**il comprend un second processeur (162) et une seconde mémoire (163) configurée pour stocker un programme informatique apte à s'exécuter dans le processeur (162),
dans lequel le second processeur (162) est configuré pour exécuter le programme informatique afin d'exécuter les opérations du procédé selon la revendication 5 ou 6 ou exécuter les opérations du procédé selon la revendication 10 ou 11.

14. Un support d'enregistrement, dans lequel un programme informatique est stocké, **caractérisé en ce que** le programme informatique est exécuté par un processeur pour mettre en œuvre les opérations du procédé selon l'une quelconque des revendications 1 à 4, ou exécuter les opérations du procédé selon l'une quelconque des revendications 5 à 6, ou exécuter les opérations du procédé selon l'une quelconque des revendications 7 à 9, ou exécuter les opérations du procédé selon la revendication 10 ou 11.
